(19) Europäisches Patentamt
European Patent Office
Office européen des brevets

(11) EP 4 530 583 A1

(12) **EUROPEAN PATENT APPLICATION**

(43) Date of publication:
02.04.2025 Bulletin 2025/14

(21) Application number: 23306626.5

(22) Date of filing: 28.09.2023

(51) International Patent Classification (IPC):
G01D 18/00 (2006.01)     H02P 6/00 (2016.01)

(52) Cooperative Patent Classification (CPC):
H02P 25/06; G01D 5/145; G01D 18/008;
H02P 6/006; H02P 6/16

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: SCHNEIDER ELECTRIC INDUSTRIES
SAS
92500 Rueil-Malmaison (FR)

(72) Inventors:
• HAN, Zhaoqiang
77933 Lahr (DE)
• WURTH, Rüdiger
77654 Offenburg (DE)

(74) Representative: Manitz Finsterwald
Patent- und Rechtsanwaltspartnerschaft mbB
Martin-Greif-Strasse 1
80336 München (DE)

(54) **METHOD FOR TRACK CALIBRATION AND SYSTEM FOR TRACK CALIBRATION**

(57)     A method for track calibration of a linear motor system comprises
- controlling linear motors to move a transport element along a track in a calibration run,
- determining position jumps at segment boundaries of each of the linear motors based on position feedback signals from position sensors of the respective linear motor and its adjacent linear motors in the calibration run,
- generating an offset value and/or a gain value for each of the linear motors from the determined position jumps,
- storing the offset value and/or the gain value for each linear motor in the storage unit.

Fig. 1A

**Description**

The present invention relates to a method for track calibration of a linear motor system, particularly a multi-carrier system, and to a system for track calibration.

A multi-carrier system comprises several linear motors, also referred to as segments, arranged in a row. The linear motors have a track, for example defined by a rail, where transport elements, also referred to as carriers, can be moved along the track by application of a driving force through the linear motors. The track can be either closed so that the transport elements can theoretically be moved infinitely in one direction along the track, or open so that the track has two ends and the transport elements are movable between these two ends.

Usually, a PCBA board (printed circuit board) with position sensors, also referred to as encoders, is mounted in each segment. The position sensors are used to measure the position of carriers with the position sensors' measurement range being usually larger than the length of the segment so that the position of the carriers can be detected at any position along the track, even when there is a gap between adjacent segments.

Due to the size and complexity of such a track system, the elements of the system such as segments, rails etc. are usually shipped separately to the end users or customers and assembled at the customer site. Segments and the rail defining the track may be assembled with tolerance. Further, due to possible errors in manufacture, the PCBA board of encoders can be mounted with tolerance within a segment. In these cases, there are position jumps of a carrier at segment boundaries between two adjacent segments. These position jumps lead to poor carrier movement.

The present invention seeks to provide a method and a system for track calibration to improve the smoothness of carrier movement at the segment boundaries and to keep the repeat accuracy.

This problem is solved by the subject-matter of the independent claims. Advantageous embodiments are defined in the dependent claims and result from the description and the drawings.

The method according to the invention serves for track calibration of a linear motor system, particularly a multi-carrier system, the linear motor system having at least one transport element, a plurality of linear motors being arranged in a row and having a track, wherein adjacent linear motors adjoin each other at a segment boundary and each of the linear motors is configured to apply a driving force for moving the transport element along the track and comprises at least one position sensor, preferably a plurality of position sensors, for detecting the position of the transport element as it travels along the track, and a control unit configured to control the linear motors to apply the driving force to the transport element, the control unit comprising a processing unit and a storage unit. The method comprises the following steps:

- controlling the linear motors to move the transport element along the track in a calibration run,
- determining position jumps at the segment boundaries of at least a part of the linear motors based on position feedback signals from the position sensors of the respective linear motor and its adjacent linear motors in the calibration run,
- generating an offset value and/or a gain value for at least the part of the linear motors from the determined position jumps,
- storing the offset values and/or the gain values in the storage unit.

"At least a part of the linear motors" may particularly mean that position jumps are determined and offset and/or gain values are generated for only one linear motor, for each second linear motor along the track, or for each of the linear motors.

In the calibration run, one transport element is moved along the track. This might particularly be done at relatively slow and preferably constant speed such as approximately 50 mm/s. Since the dimensions of the single linear motors are known, the positions of the segment boundaries are also known. As the transport element passes a segment boundary, an abrupt or step-like discrepancy will be present between position feedback signals from the position sensors of the linear motors adjoining each other at the segment boundary when there is a gap between these adjacent linear motors, i.e. the linear motor upstream the segment boundary and the linear motor downstream the segment boundary. This discrepancy corresponds to a "position jump" so that the position jumps can be determined by analyzing the position feedback signals from the position sensors of the adjacent linear motors.

By the method according to the invention, the linear motors can be calibrated easily by the customers themselves during the commissioning. No separate sensors or calibration system is necessary to calibrate the linear motor system in accordance with the method. The linear motor system including one transport element is everything it needs to conduct the method and to calibrate the track.

If, after commissioning of the linear motor system, one segment is defect and must be replaced, the defective segment can be replaced, and the replacement segment can be calibrated separately on the track without any impact on the other segments. It is merely necessary to align the start and end positions of this segment to the end position of the previous linear motor and the start position of next linear motor.

Determining the position jumps at the segment boundaries of each of the linear motors based on position feedback signals from the position sensors of the respective linear motor and its adjacent linear motors in the calibration run particularly means that position values obtained from the respective position feedback signals at the respective segment boundary are subtracted, i.e. when a particular linear motor is under consideration, then the end position of the preceding linear motor is subtracted from the start position of the linear motor under consideration to obtain the position jump at the segment boundary to the preceding linear motor. Likewise, the end position of the linear motor under consideration is subtracted from the start position of the subsequent linear motor to obtain the position jump at the segment boundary to the subsequent linear motor.

In this regard, the terms "preceding", "subsequent", "next" and "previous" refer to the sequence of linear motors along the track.

By considering the position jumps at the segment boundaries, it is merely necessary to consider each linear motor separately including its previous or preceding and its next or subsequent linear motor and the respective position jumps at the segment boundary. Particularly, it is not necessary to obtain a full ideal position signal with an additional measurement system beforehand that represents an ideal or nominal position signal for the whole track.

In the following, an example of determining position jumps and generating an offset value and a gain value is provided, in which the following definitions are used:

| | |
|---|---|
| $P_{start}$: | start position of this linear motor |
| $P_{end}$: | end position of this linear motor |
| $P_{prev}$: | end position of previous linear motor |
| $P_{next}$: | start position of next linear motor |
| $\Delta P_{start}$: | position jump at the beginning of this linear motor |
| $\Delta P_{end}$: | position jump at the end of this linear motor |
| $\Delta P_{avrg}$: | average position jumps of this linear motor |
| Bias: | offset or bias of this linear motor |
| $\Delta P_{start,bias}$: | position jump at beginning after application of the offset or bias |
| $\Delta P_{end,bias}$: | position jump at end after application of the offset or bias |

It should be noted that the determination of position jumps and the generation of offset and gain values is done separately for each linear motor so that the following calculations always refer to the linear motor under consideration ("this linear motor") and the previous and next linear motors along the track relative to the linear motor under consideration.

The values $P_{start}$, $P_{end}$, $P_{prev}$, and $P_{next}$ correspond to position feedback signals of the respective position sensors and are determined during the calibration run.

For example, the position jumps can be determined as follows:

$$\Delta P_{start} = P_{start} - P_{prev}$$

$$\Delta P_{end} = P_{next} - P_{end}$$

Moreover, the following is true for a linear motor having the index i:

$$P_{end}(i) = P_{prev}(i + 1)$$

$$P_{next}(i) = P_{start}(i + 1)$$

$$\Delta P_{start}(i) = \Delta P_{end}(i - 1)$$

In an advantageous embodiment, generating an offset value for a linear motor includes calculating an average position jump value of a first position jump at the segment boundary to the preceding linear motor and a second position jump at the segment boundary to the subsequent linear motor and subtracting the average position jump value from the first position jump or the second position jump. Accordingly, the offset or bias for a linear motor can be calculated by using the average value of the position jumps at both segment boundaries of the linear motor under consideration and subtracting it from the position jump at the end of this linear motor:

$$\Delta P_{avrg} = \frac{\Delta P_{start} + \Delta P_{end}}{2}$$

$$Bias = \Delta P_{end} - \Delta P_{avrg}$$

The offset value can be used for shifting the start and end positions of the respective linear motor:

$$P_{start,bias} = P_{start} + Bias$$

$$P_{end,bias} = P_{end} + Bias$$

With the shifted start and end positions, the shifted position jumps at the segment boundaries become equal to the average value of the position jumps:

$$\Delta P_{start,bias} = P_{start,bias} - P_{prev} = \Delta P_{start} + Bias = \Delta P_{avrg}$$

$$\Delta P_{end,bias} = P_{next} - P_{end,bias} = \Delta P_{end} - Bias = \Delta P_{avrg}$$

A gain value can be calculated as follows with $L_{motor}$ being defined as the length along the track of the linear motor or segment under consideration:

$$Gain = 1 + \frac{\Delta P_{avrg}}{L_{motor}}$$

By applying the gain value to the offset start and end positions, the position jumps at the beginning and end of the linear motor under consideration can be eliminated. When the method is repeatedly applied to the other linear motors of the whole track, a complete track calibration can be achieved.

While a calibration of the track under consideration of each linear motor separately and including its previous and next linear motors has been described, another way could be to evenly distribute the position jumps between the segments throughout the entire track. In this case, however, it is necessary to consider all linear motors of the track for the calculation so as to achieve a global optimization for the entire track.

In such an embodiment, generating an offset value for a linear motor includes calculating an average position jump value from all position jumps determined at the segment boundaries and subtracting, for each linear motor, the average position jump value from an end position jump value of the respective linear motor at the segment boundary to the subsequent linear motor.

In this case, the average position jump value $\Delta P_{avrg,all}$ from all position jumps is defined as follows with n being equal to the number of linear motors in the track:

$$\Delta P_{avrg,all} = \frac{1}{n}\sum_{i=1}^{n}\Delta P_{start}(i) = \frac{1}{n}\sum_{i=1}^{n}\Delta P_{end}(i)$$

With the definition provided before, the offset or bias value is defined as follows:

$$Bias(i) = \Delta P_{end}(i) - \Delta P_{avrg,all}$$

Thus, the start and end positions after applying the offset values are defined as follows:

$$P_{end,bias}(i) = P_{end}(i) + Bias(i)$$

$$P_{start,bias}(i) = P_{start}(i) + Bias(i)$$

If an offset value is applied to any of the linear motors, the position jump at the beginning of this linear motor will get bigger as the position jump at the end of this linear motor gets smaller - by the same amount - or vice versa. The sum of both position jumps, however, remains the same, and so does also the average position jump value.

An offset calculation can then be done, starting with the last linear motor in the sequence of the track by applying an offset or bias to this linear motor in such a way that the position jump at the end of this linear motor gets equal to the average position jump value. This implies that the position jump at the beginning of this linear motor also changes due to this offset application.

Accordingly, the position jumps for the i-th linear motor are:

$$\Delta P_{end,bias}(i) = P_{next}(i) - P_{end,bias}(i) = \Delta P_{end}(i) - Bias(i) = \Delta P_{avrg,all}$$

$$\Delta P_{start,bias}(i) = P_{start,bias}(i) - P_{prev}(i) = \Delta P_{start}(i) + Bias(i)$$

Furthermore, for segment i-1, considering that the application of an offset to segment "i" has an impact on segment i-1:

$$\Delta P_{end}(i - 1) = \Delta P_{start,bias}(i) = \Delta P_{start}(i) + \Delta P_{end}(i) - \Delta P_{avrg,all}$$

Using the above-mentioned definition for the offset value:

$$Bias(i - 1) = \Delta P_{end}(i - 1) - \Delta P_{avrg,all}$$

Thus, the shifted position jumps are as follows:

$$\Delta P_{end,bias}(i - 1) = \Delta P_{end}(i - 1) - Bias(i - 1) = \Delta P_{avrg,all}$$

$$\Delta P_{start,bias}(i - 1) = \Delta P_{start}(i - 1) + Bias(i - 1)$$

For the calibration of a closed track, it is started with the last (n-th) segment, so that

$$\Delta P_{end,bias}(n) = \Delta P_{avrg,all}$$

which means that the last segment is shifted so that the gap between the last segment and the first segment gets equal to $\Delta P_{avrg,all}$.

For the last (n-th) segment:

$$\Delta P_{start,bias}(n) = \Delta P_{start}(n) + Bias(n) = \Delta P_{start}(n) + \Delta P_{end}(n) - \Delta P_{avrg,all}$$

For the second last (n-1) segment:

$$\Delta P_{start,bias}(n - 1) = \Delta P_{start}(n - 1) + \Delta P_{end}(n - 1) - \Delta P_{avrg,all}$$

$$\Delta P_{start,bias}(n - 1) = \Delta P_{start}(n - 1) + \Delta P_{start,bias}(n) - \Delta P_{avrg,all}$$

$$\Delta P_{start,bias}(n - 1) = \Delta P_{start}(n - 1) + \Delta P_{start}(n) + \Delta P_{end}(n) - \Delta P_{avrg,all} - \Delta P_{avrg,all}$$

F or the third last segment (n-2):

$$\Delta P_{start,bias}(n-2) = \Delta P_{start}(n-2) + \Delta P_{end}(n-2) - \Delta P_{avrg,all}$$

$$\Delta P_{start,bias}(n-2) = \Delta P_{start}(n-2) + \Delta P_{start,bias}(n-1) - \Delta P_{avrg,all}$$

$$\Delta P_{start,bias}(n-2)$$
$$= \Delta P_{start}(n-2) + \Delta P_{start}(n-1) + \Delta P_{start}(n) + \Delta P_{end}(n) - 3\Delta P_{avrg,all}$$

When these calculations are done from n to 2, the following results:

$$\Delta P_{start,bias}(2) = \sum_{i=2}^{n} \Delta P_{start}(i) + \Delta P_{end}(n) - (n-1) * \Delta P_{avrg,all}$$

F or a closed track: $\Delta P_{end}(n) = \Delta P_{start}(1)$

The remaining gap between the first and the second segment gets

$$\Delta P_{start,bias}(2) = \sum_{i=1}^{n} \Delta P_{start}(i) - (n-1) * \Delta P_{avrg,all} = \Delta P_{avrg,all}$$

For a closed track, the bias or offset value for the first segment will remain 0, because

$$\Delta P_{end,bias}(1) = \Delta P_{start,bias}(2) = \Delta P_{avrg,all}$$

$$\Delta P_{start,bias}(1) = \Delta P_{end,bias}(n) = \Delta P_{avrg,all}$$

For an open track, the situation is different as there are n segments, but only n-1 gaps. In the calculation sequence above, any value could be used for $\Delta P_{end}(n)$, e.g. 0. Then the bias value of the n-th segment is

$$Bias(n) = 0 - \Delta P_{avrg,all}$$

In an open track, the offset value or bias also has to be calculated for the first segment in accordance with the calculations presented above, since in an open track, the offset value of the first segment will usually not be equal to 0.
Thus, the first position jump and all position jumps at the segment boundaries of the entire track are equal to the average position jump, i.e. the position jumps are evenly distributed over the whole track.
The method may further comprise balancing the offset values generated for all linear motors by determining an average offset value from a maximum offset value and a minimum offset value out of the offset values and subtracting the average offset value from each of the offset values. We consider "B" to be the average offset value:

$$B = \frac{\max(Bias(i)) + \min(Bias(i))}{2}$$

Then, the respective offset values are re-defined as follows in order to limit the maximum and minimum offset values of any segment:

$$Bias\,(i) = Bias(i) - B$$

In this way, the largest values in terms of amount out of the offset values can be reduced.

When the position jumps are harmonized and have the same value throughout the entire track, the position jumps can be fully eliminated by calculating the gain as follows:

$$Gain = 1 + \frac{\Delta P_{avrg,all}}{2L_{motor}}$$

With the method described above, it is possible to calibrate a track and eliminate position jumps as much as possible without the need of external encoders or an encoding system. Furthermore, this method is valid for both open and closed tracks, and it allows to calibrate a replacement segment when there has been in a defect. This is particularly advantageous and saves a lot of effort in the case of large linear motor systems with many linear motors.

According to another aspect, the invention relates to a system for track calibration of a linear motor system, particularly a multi-carrier system. The system comprises at least one transport element, a plurality of linear motors being arranged in a row and having a track, wherein adjacent linear motors adjoin each other at a segment boundary and each of the linear motors is configured to apply a driving force for moving the transport element along the track and comprises at least one position sensor, preferably a plurality of position sensors, for detecting the position of the transport element as it travels along the track, and a control unit configured to control the linear motors to apply the driving force to the transport element, the control unit comprising a processing unit and a storage unit, wherein the control unit is configured to perform the method as described above.

The storage unit may be either a central storage unit for the entire linear motor system, or it may be a separate storage unit provided in each linear motor.

In particular, each linear motor can have six outer surfaces, namely a top side, a bottom side, an outer side, an inner side and two side surfaces. Side surfaces of adjacent linear motors are disposed at the "segment boundary". The track for the transport elements can be disposed on the outer side. The inner side is arranged in the area of an inner space of the transport system.

The transport system or the multi-carrier system can be designed to circulate so that the linear motors have a closed track along which the transport elements can theoretically be moved endlessly in the same direction. However, it is also possible for the linear motors to form open paths with a starting point and an end point.

In particular, the transport elements are driven magnetically. For this purpose, the transport elements have one or more permanent magnets to which a driving force is applied by means of a changing and/or moving magnetic field generated by the linear motors. The driving force leads to a movement of the transport elements in the direction of movement along the track. In particular, the transport elements can be moved independently and separately from each other.

The transport element can also be referred to as a carrier, mover or runner, while the linear motor can also be referred to as a stator or segment.

It should be noted that the remarks and annotations made with respect to the disclosed method for track calibration apply mutatis mutandis also to the disclosed system for track calibration and vice versa. It is understood that all features and configurations mentioned herein can be combined with each other, unless explicitly stated otherwise.

In the following, the invention is described by way of example with reference to embodiments shown schematically in the drawings. The Figures show the following:

Fig. 1A    a perspective view on a part of a linear motor system,

Fig. 1B    a schematic view of a control unit,

Fig. 2    a schematic view on linear motors and a transport element being moved along the track during a calibration run,

Fig. 3    a schematic view showing the definition of parameters in relation to a segment,

Fig. 4    a schematic view visualizing the calibration of a track and the effects of applying offset and gain values,

Fig. 5    a diagram showing position jumps along an exemplary track before and after calibration of the track under consideration of each second linear motor separately, and

Fig. 6        a diagram showing position jumps along an exemplary track before and after calibration of the track under consideration of all linear motors to evenly distribute the position jumps.

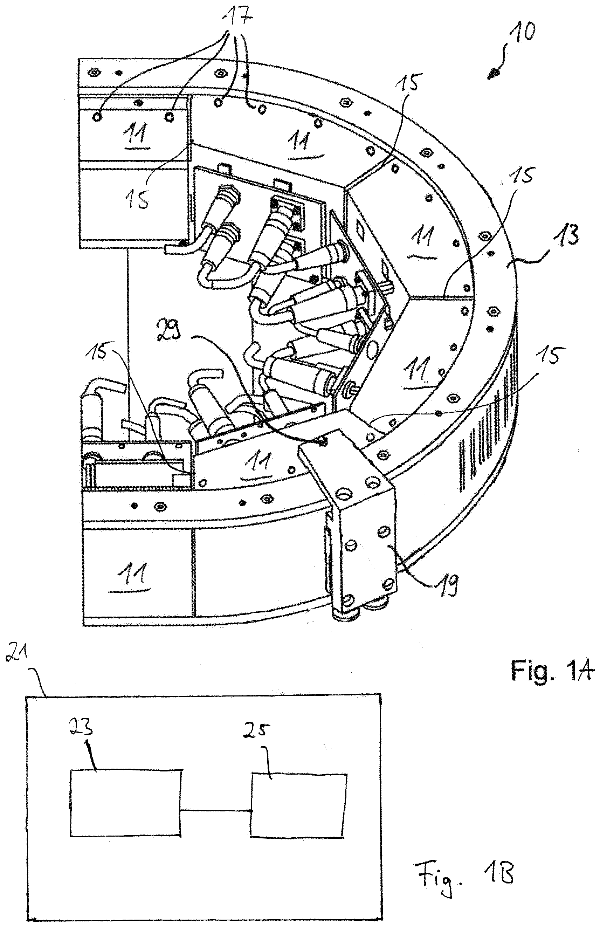

In Fig. 1A, a part of a linear motor system 10 embodied as a multi-carrier system is shown that has a plurality of linear motors 11 arranged in a row with a track 13 being mounted on the linear motors 11. Segment boundaries 15 are defined where adjacent linear motors 11 adjoin each other.

Further, the linear motor system 10 comprises a transport element 19, and each of the linear motors 11 is capable of applying a magnetic driving force for moving the transport element 19 along the track 13. Furthermore, each linear motor 11 comprises position sensors 17 that cooperate with a position magnet 29 on the transport element 19 to detect the position of the transport element 19 as it travels along the track 13 and to generate position feedback signals.

Fig. 1B schematically shows a control unit 21 of the linear motor system 10 that has a processing unit 23 and a storage unit 25. The control unit 21 is connected to the linear motors 11 via a communication link such as a data bus (not shown). Via the communication link, the control unit 21 receives the position feedback signals from the position sensors 17 indicative of a position of the transport element 19 and can provide control signals to the linear motors 11 so as to control the linear motors 11 to apply the driving force to the transport element 19.

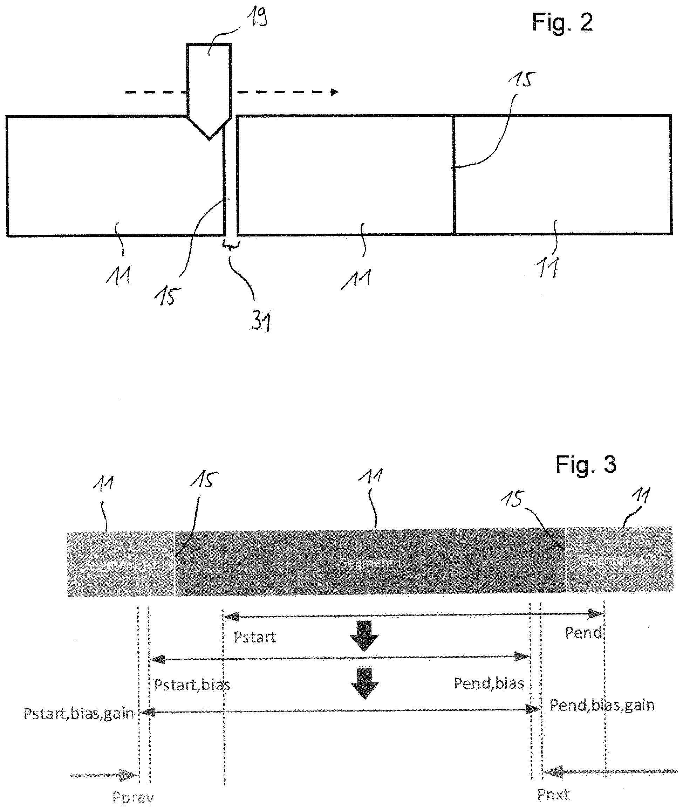

Fig. 2 schematically shows any three linear motors 11 out of the plurality of linear motors 11, the three segments adjoining each other at a respective segment boundary 15 as mentioned before. The transport element 19 is moved along the track (not shown in Fig. 2) defined by the linear motors 11 in direction of the dashed arrow in a calibration run. In the calibration run, the transport element is moved along the track for example at approximately 50 mm/s. Furthermore, it is shown that a gap 31 is present between the first and second linear motors 11 in Fig. 2, for example due to assembling tolerances. These gaps 31 result in "position jumps" of linear motors 11 at segment boundaries 15 between two adjacent linear motors 11, i.e. in jumps or discrepancies between position feedback signals of adjacent linear motors 11, and lead to poor movement performance.

In order to compensate these gaps, the control unit 21 determines an offset value and a gain value for each second linear motor 11, saves these values in the storage unit 25 and uses them for controlling the respective linear motors 11 so as to reduce or eliminate the position jumps. Generating an offset value for a linear motor 11 includes calculating an average position jump value of a first position jump at the segment boundary 15 to the preceding linear motor 11 and a second position jump at the segment boundary 15 to the subsequent linear motor 11 and subtracting the average position jump value from the second position jump. Since the offset value is generated to eliminate or compensate the gaps at both the beginning and the end of the respective linear motor 11 under consideration, also the gaps of the previous and subsequent linear motors 11 along the track are automatically compensated or eliminated. Accordingly, it is possible to generate the offset values for only each second linear motor 11.

Alternatively, if the entire track can be considered to eliminate the position jumps globally, generating an offset value for a linear motor 11 includes calculating an average position jump value from all position jumps determined at the segment boundaries 15 and subtracting, for each linear motor 11, the average position jump value from an end position jump value of the respective linear motor 11 at the segment boundary 15 to the subsequent linear motor 11.

The gain value for each linear motor 11 is generated depending on the average position jump value and depending on the length along the track of the respective linear motor 11.

With reference to Fig. 3, it can be seen that a start position $P_{start}$ and an end position $P_{end}$ of a "segment i" 11 can be transformed to an offset start position $P_{start,bias}$ and an offset end position $P_{end,bias}$ by application of the offset value or bias value. This corresponds to shifting the whole segment 11 in such a way that the differences between $P_{start,bias}$ and $P_{prev}$ on the one hand and between $P_{end,bias}$ and $P_{next}$ on the other hand are equal in amount, where $P_{prev}$ corresponds to the end position of the previous linear motor 11 and $P_{next}$ corresponds to the start position of the next linear motor 11. In a second step, by applying the gain value, the "length" of the segment 11 along the track can be "stretched" so that the corrected start and end position $P_{start,bias,gain}$, $P_{end,bias,gain}$ of the segment under consideration, after application of both offset value and gain value, correspond exactly to the end position of the previous linear motor 11 and the start position of the next linear motor 11, respectively. The present invention aims to reliably and precisely determine these values in a way that can be performed without any external measuring system and in such a way that it is not necessary to calibrate the whole linear motor system again upon replacement of a single linear motor 11 due to malfunction.

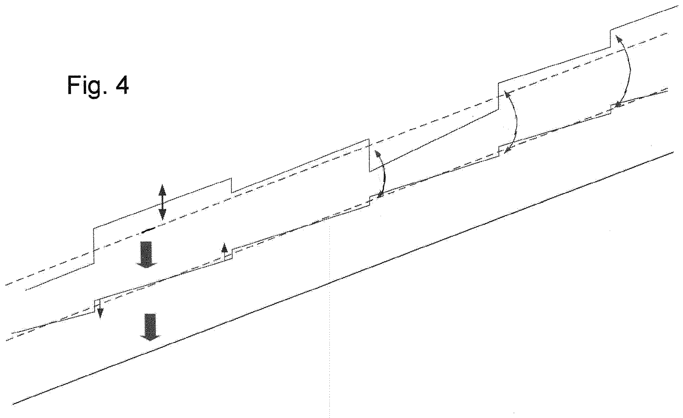

If the position jumps are eliminated globally for the entire track, i.e. all linear motors 11 of the track 13 are considered for calculating or determining the offset value and the gain value so as to achieve a global optimization for the entire track, it is possible to eliminate the position jumps completely as shown in Fig. 4. As shown in Fig. 4, in a first step, the offset value or gain value is applied so as to reduce the amount of the position jumps and align the position jumps to bring the position jumps to the same level, i.e. after application of the respective offset value determined for the respective linear motor 11, the position jumps are all the same. In a second step, the gain value is applied so that the slope of the position is changed and the position jumps are completely eliminated, i.e. the position signal becomes a constant line that corresponds with the real movement of the transport element 19.

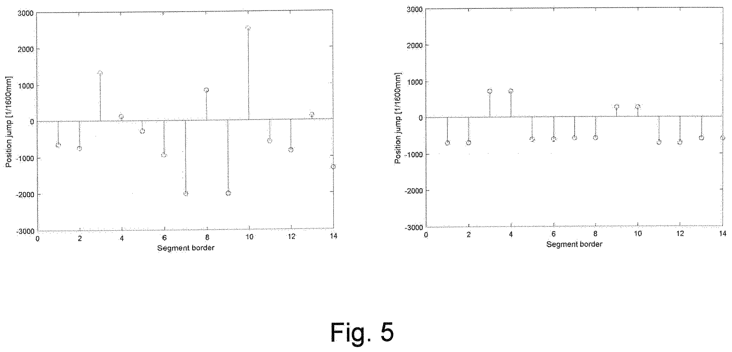

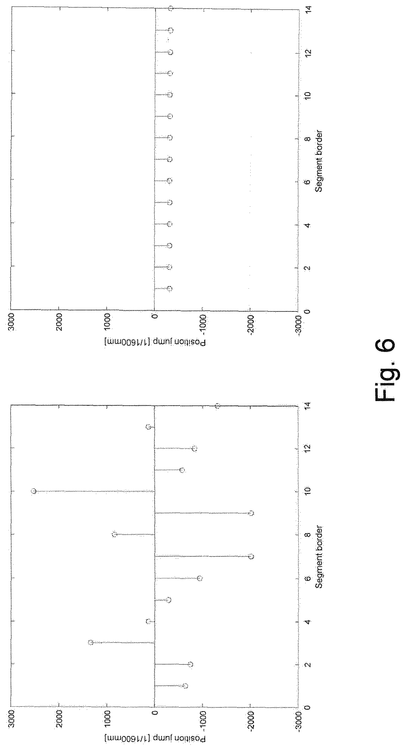

Fig. 5 and 6 respectively show diagrams indicating the benefits of the invention with regard to the position jumps when the position jumps are minimized for each second segment separately (Fig. 5) or when the position jumps are distributed to the neighbored segments (Fig. 6) which, however, needs a global consideration of all segments. Both Fig. 5 and 6 show the position jumps before (left) and after (right) applying the offset value or bias value.

As Fig. 5 shows (right side), the position jumps at a segment are changed so that the position jumps of one segment at its segment boundaries to the preceding linear motor and to the subsequent linear motor are averaged and, therefore, have the same value. The position jumps having the same value can be eliminated by determining and applying a respective gain value in a following step.

In Fig. 6, in which a global distribution and consideration of all segments has been performed, all segment jumps have been harmonized so as to have the same value throughout the entire track.

In both cases, the amount of the position jumps can be significantly reduced.

<u>List of reference signs</u>

| 10 | linear motor system |
|----|----|
| 11 | linear motor |
| 13 | track |
| 15 | segment boundary |
| 17 | position sensor |
| 19 | transport element |
| 21 | control unit |
| 23 | processing unit |
| 25 | storage unit |
| 29 | position magnet |
| 31 | gap |

**Claims**

1.  A method for track calibration of a linear motor system (10), particularly a multi-carrier system, having

    at least one transport element (19),
    a plurality of linear motors (11) being arranged in a row and having a track (13), wherein adjacent linear motors (11) adjoin each other at a segment boundary (15) and each of the linear motors (11) is configured to apply a driving force for moving the transport element (19) along the track (13) and comprises at least one position sensor (17) for detecting the position of the transport element (19) as it travels along the track (13), and
    a control unit (21) configured to control the linear motors (11) to apply the driving force to the transport element (19), the control unit (21) comprising a processing unit (23) and a storage unit (25),
    the method comprising the following steps:

    - controlling the linear motors (11) to move the transport element (19) along the track (13) in a calibration run,
    - determining position jumps at the segment boundaries (15) of at least a part of the linear motors (11) based on position feedback signals from the position sensors (17) of the respective linear motor (11) and its adjacent linear motors (11) in the calibration run,
    - generating an offset value and/or a gain value for at least the part of the linear motors (11) from the determined position jumps,
    - storing the offset values and/or the gain values in the storage unit (25).

2.  The method according to claim 1,
    **characterized in that** generating an offset value for a linear motor (11) includes calculating an average position jump value of a first position jump at the segment boundary (15) to the preceding linear motor (11) and a second position jump at the segment boundary (15) to the subsequent linear motor (11) and subtracting the average position jump value from the first position jump or the second position jump.

3.  The method according to claim 1,
    **characterized in that** generating an offset value for a linear motor (11) includes calculating an average position jump value from all position jumps determined at the segment boundaries (15) and subtracting, for each linear motor (11), the average position jump value from an end position jump value of the respective linear motor (11) at the segment boundary (15) to the subsequent linear motor (11).

4.  The method according to claim 2 or 3,

**characterized in that** the gain value for the linear motor (11) is generated depending on the average position jump value.

5. The method according to claim 4,
**characterized in that** the gain value for the linear motor (11) is further generated depending on the length of the linear motor.

6. The method according to any one of the preceding claims, further comprising

- balancing the offset values generated for all linear motors (11) by determining an average offset value from a maximum offset value and a minimum offset value out of the offset values and subtracting the average offset value from each of the offset values.

7. A system for track calibration of a linear motor system (10), particularly a multi-carrier system, the system comprising

at least one transport element (19),
a plurality of linear motors (11) being arranged in a row and having a track (13), wherein adjacent linear motors (11) adjoin each other at a segment boundary (15) and each of the linear motors (11) is configured to apply a driving force for moving the transport element (19) along the track (13) and comprises at least one position sensor (17) for detecting the position of the transport element (19) as it travels along the track (13), and
a control unit (21) configured to control the linear motors (11) to apply the driving force to the transport element (19), the control unit (21) comprising a processing unit (23) and a storage unit (25), wherein the control unit (21) is configured to perform the method of any one of the preceding claims.

Fig. 1A

Fig. 1B

Fig. 2

Fig. 3

Fig. 4

Fig. 5

Fig. 6

| | Europäisches Patentamt<br>European Patent Office<br>Office européen des brevets | **EUROPEAN SEARCH REPORT** | Application Number<br>**EP 23 30 6626** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 914 620 B2 (ROCKWELL AUTOMATION TECH INC [US]) 9 February 2021 (2021-02-09)<br>* the whole document *<br>----- | 1-7 | INV.<br>G01D18/00<br>H02P6/00 |
| A | CN 111 750 904 A (UNIV NANJING AERONAUTICS & ASTRONAUTICS)<br>9 October 2020 (2020-10-09)<br>* abstract; figures 1-6 *<br>----- | 1-7 | |

| | | | TECHNICAL FIELDS SEARCHED (IPC) |
|---|---|---|---|
| | | | G01D<br>H02P |

The present search report has been drawn up for all claims

| Place of search | Date of completion of the search | Examiner |
|---|---|---|
| Munich | 15 March 2024 | Zeng, Wenyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 30 6626**

This annex lists the patent family members relating to the patent documents cited in the above-mentioned European search report.
The members are as contained in the European Patent Office EDP file on
The European Patent Office is in no way liable for these particulars which are merely given for the purpose of information.

**15-03-2024**

| Patent document cited in search report | | Publication date | Patent family member(s) | | Publication date |
|---|---|---|---|---|---|
| US 10914620 | B2 | 09-02-2021 | US | 2020166389 A1 | 28-05-2020 |
| | | | US | 2021131839 A1 | 06-05-2021 |
| CN 111750904 | A | 09-10-2020 | NONE | | |

For more details about this annex : see Official Journal of the European Patent Office, No. 12/82